# EUROPEAN PATENT APPLICATION

(11) **EP 1 818 864 A1**
(43) Date of publication of application: **15.08.2007**
(21) Application number: 06114715.3
(22) Date of filing: 30.05.2006
(51) Int. Cl.: G06Q 10/00, G06Q 30/00

(54) **Electronic shelf labels, electronic shelf label system server, electronic shelf label system**

(30) Priority: 30.01.2006 JP 2006021388
(71) Applicant: FUJITSU LIMITED, Kawasaki-shi, Kanagawa 211-8588 (JP)
(72) Inventor: Hosokawa, Takeshi Fujitsu Limited, Kawasaki-shi Kanagawa 211-8588 (JP)
(74) Representative: Kreutzer, Ulrich

(57) **Abstract**

The electronic shelf label (100) displays, for each size, the inventory quantity, together with commercial item detailed information that includes the commercial item name and the price of each commercial item that is placed at a commercial item shelf position to which the electronic shelf label is attached. The configurations also make it possible to display, for each size, the total inventory quantity indicating the number of commercial items that are not placed on the commercial item shelf but exist in the store as inventory.

## Description

### BACKGROUND OF THE INVENTION

### 1. Field of the Invention

The present invention generally relates to technology for managing commercial items by using IC tags, and specifically relates to a technology for displaying inventory information of commercial items that are displayed on display shelves in stores.

### 2. Description of the Related Art

Conventionally, a system is known by which an IC tag including an IC chip that stores therein identification information is attached to each commercial item so that commercial items are managed with the identification information that is associated with the commercial items. According to this system, the identification information is read from the IC tags, and the commercial items are managed, using a management apparatus, based on the identification information.

As an example of such a system, Japanese Patent Laid-Open Publication No. 2003-118813, for example, discloses a system that includes a commercial item storage cabinet placed in the back room of a store. In this system, an IC tag reader that reads identification information from an IC tag attached to each commercial item is attached to each of the commercial item storage spaces in the storage cabinet. The identification information read by the IC tag reader is transmitted to a system server. It is possible to recognize in which one of the commercial item storage spaces the IC tag reader that has read the particular piece of identification information is located.

Further, each piece of identification information that has been received by the system server is in correspondence with a piece of commercial item information. Provided on the commercial item storage cabinet side is a notification lamp that, when a desired commercial item is specified based on a piece of commercial item information on the system server side, notifies in which one of the commercial item storage spaces the specified commercial item is stored. With this arrangement, using the system server, it is possible to manage, in a centralized manner, what commercial items are stored in which commercial item storage space. Thus, it is possible to manage the commercial items that are stored in the commercial item storage cabinet easily and without fail.

According to conventional techniques including the one disclosed in Japanese Patent Laid-Open Publication No. 2003-118813, it is possible to easily find out, on the commercial item storage cabinet side, what commercial items are stored in which commercial item storage space; however, it is not possible to have an understanding of commercial item information related to the commercial items.

On the other hand, another technique related to an electronic shelf label for electronically displaying the price of each commercial item displayed on a commercial item display shelf in the store area is publicly known. However, the electronic shelf label merely displays the price of each commercial item, which is static commercial item information that is fixed and rarely varies. This technique merely replaces any price displaying medium with the electronic medium.

Accordingly, even if the combination of the conventional technique disclosed in Patent Document 1 and the technique of the electronic shelf label is applied to a commercial item display shelf placed in the shopping area of a store, it is not possible to display, in a real-time manner, commercial item information that can dynamically change from moment to moment using the electronic shelf in such a manner that the commercial item information can be understood on the commercial item display shelf side in a real-time manner.

To be more specific, in a store that markets, in a brief cycle, a wide variety of commercial items in small quantities, because it has a high turnover of commercial items and also because the layout of the shelf positions is changed frequently, it is difficult to manage the inventory status of the commercial items while keeping the shelf positions associated with the commercial item information. Moreover, in this type of store, commercial items of one kind in various sizes are often displayed on one shelf. Thus, it is impossible to find out, at a glance, whether a commercial item in a desired size is in stock. Accordingly, to find out if the desired size is in stock, it is necessary to actually take the commercial items in hand and check the sizes one by one.

In view of this situation, there is a need in such a store that markets, in a brief cycle, a wide variety of commercial items in small quantities to be able to efficiently display stock information of the commercial items that are displayed on the display shelves and thereby enable the store staff and the customers to easily have an understanding of the inventory status of the commercial items.

### SUMMARY OF THE INVENTION

It is an object of the present invention to at least solve the problems in the conventional technology.

According to an aspect of the present invention, an electronic shelf label that displays, at each of commercial item placement positions, information obtained by a server device based on pieces of commercial item identification information, the server device bringing the pieces of commercial item identification information read from electronic tags each of which is attached to a different one of commercial items placed on shelves in correspondence with pieces of commercial item position information read from electronic tags each of which is attached to a different one of the commercial item placement positions on the shelves. At each of the commercial item placement positions on the shelves, the electronic shelf label for each of the commercial items, a commercial item inventory quantity calculated by the server device and commercial item detailed information that corresponds to the pieces of commercial item identification information.

According to another aspect of the present invention, a server device used in an electronic shelf label system that brings pieces of commercial item identification information read from electronic tags each of which is attached to a different one of commercial items placed on shelves in correspondence with pieces of commercial item position information read from electronic tags each of which is attached to a different one of commercial item placement positions on the shelves and displays, at each of the commercial item placement positions, information based on the pieces of commercial item identification information, including a calculating unit that calculates a commercial item inventory quantity for each of the pieces of commercial item position information and for each of pieces of commercial item itemized identification information that correspond to the pieces of commercial item identification information; and an obtaining unit that obtains commercial item detailed information that corresponds to each of the commercial items of which the commercial item inventory quantity is calculated by the calculating unit.

According to still another aspect of the present invention, an electronic-shelf-label system that associates pieces of commercial item identification information read from electronic tags each of which is attached to a different one of commercial items that are placed on shelves with pieces of commercial item position information read from electronic tags each of which is attached to a different one of commercial item placement positions on the shelves and displays, at each of the commercial item placement positions, information based on the pieces of commercial item identification information, including a server device that includes a unit that calculates a commercial item inventory quantity for each of the pieces of commercial item position information and for each of pieces of commercial item itemized identification information that correspond to the pieces of commercial item identification information; and an obtaining unit that obtains commercial item detailed information that corresponds to each of the commercial items of which the commercial item inventory quantity calculated by the calculating unit; and an electronic shelf label that includes a displaying unit that associates the commercial item inventory quantity calculated by the calculating unit with the commercial item detailed information obtained by the obtaining unit and displays, at each of the commercial item placement positions corresponding to the commercial items, the associated quantity and detailed information for each of the commercial items.

According to still another aspect of the present invention, a method of displaying, in each of electronic shelf labels placed on a shelf, information obtained by a server device, based on pieces of commercial identification information read from electronic tags each of which is attached to a different one of commercial items placed on the shelf, includes the server device performing calculating a commercial item inventory quantity for each of pieces of commercial item itemized identification information that are associated with the pieces of commercial item identification information; and obtaining commercial item detailed information that corresponds to the commercial items of which the commercial item inventory quantity calculated at the calculating; and the electronic shelf label performing associating the commercial item inventory quantity calculated at the calculating with the commercial item detailed information obtained at the obtaining; and displaying, at the shelf and for each of the commercial items, the associated quantity and detailed information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic for explaining the concept of a first embodiment according to the present invention;
Fig. 2 is a schematic for explaining the contents of a display in an electronic shelf label shown in Fig. 1;
Fig. 3 is a system configuration diagram of an electronic-shelf-label system according to the embodiment;
Fig. 4 is a functional block diagram of an electronic shelf label shown in Fig. 3;
Fig. 5 is a functional block diagram of a commercial-item IC tag shown in Fig. 3;
Fig. 6 is a drawing for explaining the data format of IC tag information in the commercial-item IC tag;
Fig. 7 is an example of relationship between shelf-position IC-tag information and shelf positions;
Fig. 8 is a functional block diagram of an electronic-shelf-label system server shown in Fig. 3;
Fig. 9 is an example of a RF-JAN master shown in Fig. 8;
Fig. 10 is an example of a shelf position-JAN master shown in Fig. 8;
Fig. 11 is an example of a commercial item master shown in Fig. 8;
Fig. 12 is an example of an inventory master shown in Fig. 8;
Fig. 13 is a flowchart of a processing procedure performed by the electronic-shelf-label system server;
Fig. 14 is a functional block diagram of the units of the electronic-shelf-label system server that perform an incorrect-shelf-position detection process;
Fig. 15 is a flowchart of the incorrect-shelf-position detection process performed by the electronic-shelf-label system server;
Fig. 16 is an example of display in the electronic shelf shown in Fig. 1; and
Fig. 17 is an example of display in the electronic-shelf-label system server.

### DETAILED DESCRIPTION OF THE PREFERRED EMBODIMENTS

Exemplary embodiments according to the present invention will be explained in detail below with reference to the accompanied drawings.

In the embodiments described below, examples in which the present invention is applied to an electronic shelf label, an electronic-shelf-label system server, an electronic-shelf-label system, and an electronic-shelf-label displaying method that manage an inventory of commercial items based on radio frequency identification (RFID) and display the inventory quantity in an electronic shelf label will be explained. An electronic tag explained below is of a vicinity type, has a communication distance of approximately 70 centimeters, and has a communication frequency of 13.56 megahertz, as defined in International Organization for Standardization/International Electrotechnical Commission (ISO/IEC) 15693. Moreover, the electronic tag is a passive-type IC tag that performs transmission and reception of information using the energy from the antenna of a reader/writer as the electric power source.

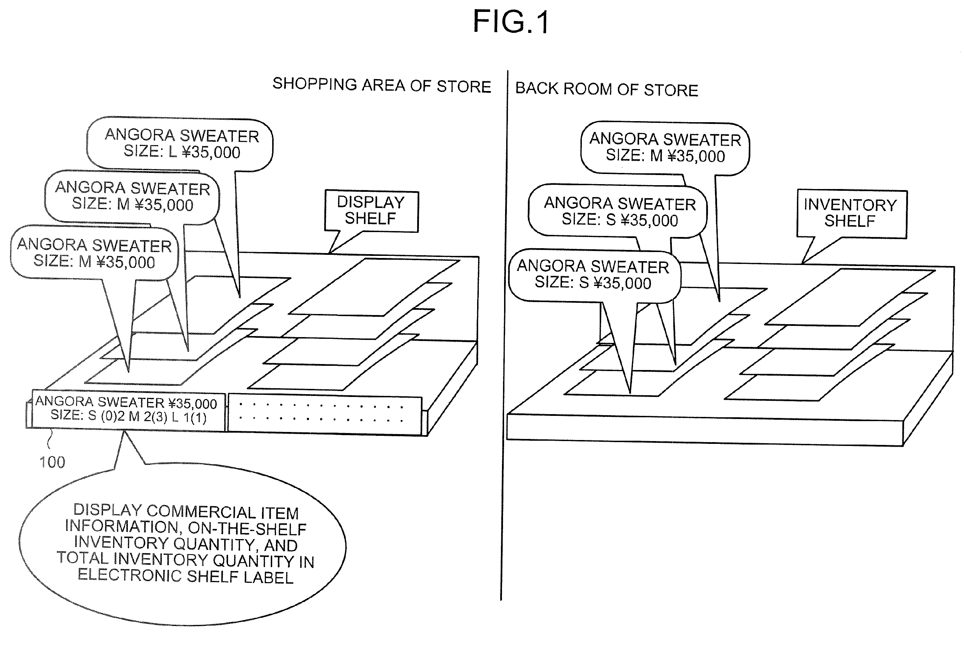

Fig. 1 is a schematic for explaining the concept of a first embodiment according to the present invention. According to the first embodiment, the quantity of each type of commercial items and for each size is calculated and displayed in an electronic shelf label 100, by counting all of the two "angora sweaters (size: M; ¥35,000)" and the one "angora sweater (size: L; ¥35,000)" that are displayed on the display shelves in the shopping area of a store; and the two "angora sweaters (size: S; ¥35,000)" and the one "angora sweater (size: M; ¥35,000)" that are stored on the inventory shelves placed in a back room of the store.

In other words, the quantity of all of the commercial items that are displayed on the display shelves in the shopping area of the store and the commercial items that are stored on the inventory shelves placed in the back room of the store are counted, and the commercial item information (e.g. commercial item name, price etc.), the on-the-shelf inventory quantity, and the total inventory quantity are displayed in the electronic shelf label. The on-the-shelf inventory denotes the number of commercial items that are displayed on the display shelves. The total inventory quantity denotes the number of commercial items obtained by adding together the number of commercial items that are displayed on the display shelves and the number of commercial items that are stored on the inventory shelves placed in the back room of the store.

Conventionally, it is not possible to recognize the size of each commercial item at a glance, while the commercial items are placed on the display shelves. For example, when the commercial items are sweaters, you can recognize the colors of the sweaters at a glance, but finding out the size of each sweater can cause a lot of trouble, because it requires you to take each of the commercial items in hand and check the sizes displayed on the commercial items one by one. Especially, when the number of commercial items displayed on the display shelves is large, and an extremely small number of commercial items are in the desired size, there is a high possibility that you need to take each of the large number of commercial items in hand and check the sizes one by one. This could prevent customers from enjoying shopping in a pleasant way.

Moreover, the store staff is required to have, at all times, an understanding of how much inventory exists for what commercial item and in what size and, if some commercial items are missing from the display shelves while there are some in stock, the store staff needs to replenish the commercial items promptly. According to the conventional technique, however, because it is not possible to find out what the sizes are at a glance, it is not possible to respond to the situation promptly, Thus, this problem could prevent the store staff from performing their tasks smoothly.

To solve these problems, the first embodiment has an arrangement in which, for each type of commercial item and for each size, the number of commercial items on the display and the total inventory quantity are displayed in an electronic shelf label, on the basis of the RFID technology, and thereby enables customers to enjoy shopping in a pleasant way and enables the store staff to have a real-time understanding of the commercial item inventory and to replenish the commercial items promptly.

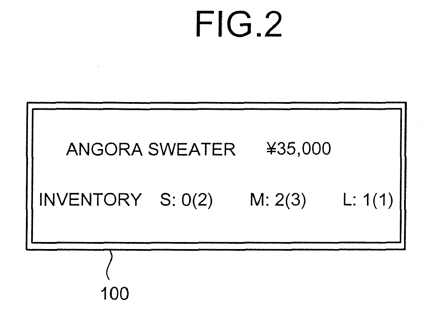

Next, the contents of the display in the electronic shelf label 100 will be explained more specifically. Fig. 2 is an example of display in the electronic shelf label 100. The display surface of the electronic shelf label 100 displays the name of the commercial item, which is "ANGORA SWEATER", the price of the commercial item, which is "¥35,000", and the inventory quantity for each size, which is "S: 0(2); M: 2(3); L: 1(1)". S: 0(2) means that, for the size S, the inventory on the display shelves is 0 and the total inventory quantity is 2; M: 2(3) means that, for the size M, the inventory on the display shelves is 2 and the total inventory quantity is 3; L: 1(1) means that, for the size L, the inventory on the display shelves is 1 and the total inventory quantity is 1. In other words, each of the numbers indicated without parentheses is the inventory quantity on the display shelves, whereas each of the numbers indicated in the parentheses is the total inventory.

As so far explained, by displaying the commercial item information and the inventory quantity for each size on the display surface of the electronic shelf label 100, it becomes possible to recognize these types of information at a glance. Thus, the customers are able to enjoy shopping in a pleasant way. Also, the store staff is able to have a real-time understanding of the commercial item inventory and replenish the commercial items promptly.

The display surface of the electronic shelf label 100 may be made of electronic paper. However, the present invention is not limited to this example. It is acceptable to use any display device as long as it is a thin and light-weight display device such as a liquid crystal display or a segment display device.

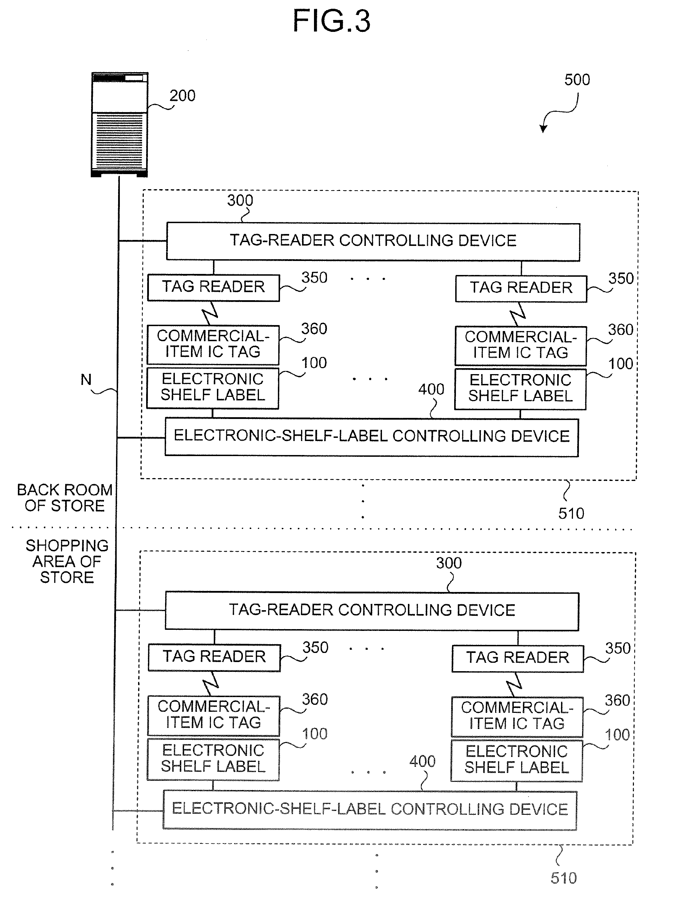

Next, the configuration of an electronic-shelf-label system 500 according to the first embodiment will be explained. Fig. 3 is a system configuration diagram of the electronic-shelf-label system 500. In the electronic-shelf-label system 500, a predetermined number of sets of electronic-shelf-label unit 510 are provided in the back room and in the shopping area of a store. Each set of electronic-shelf-label unit 510 includes a tag-reader controlling device 300 having an antenna, a plurality of tag readers 350 that are connected to the tag-reader controlling device 300, an electronic-shelf-label controlling device 400, and a plurality of the electronic shelf labels 100 that are connected to the electronic-shelf-label controlling device 400. Each of the tag-reader controlling devices 300 and the electronic-shelf-label controlling devices 400 is connected, in such a manner that communication is allowed therebetween, to an electronic-shelf-label system server 200 provided in the back room of the store via a network N.

A commercial item having a commercial-item IC tag 360 attached thereto is positioned near each of the tag readers 350 so that it is possible to read an Ubiquitous ID (UID), which is identification information that is stored in the commercial-item IC tag 360 and is unique to the commercial item. Stored inside each of the electronic shelf labels 100 is a shelf position IC tag that stores therein shelf position information, which is information that uniquely identifies a shelf position. Out of each of the electronic shelf labels 100, the shelf position information can be read by a tag reader 350 that is positioned closest to the electronic shelf label 100. In other words, the range within which each of the plurality of the tag readers 350 is able to receive electric waves from IC tags is determined in advance, and the ranges for different tag readers 350 do not interfere with one another. To be more specific, one commercial item placement position on a shelf is in correspondence with one of the electronic shelf labels 100. One of the tag readers 350 is in correspondence with the combination of the one commercial item placement position and the one of the electronic shelf labels 100 and is able to read the IC tag information.

As for the electronic-shelf-label units 510, the ones placed in the shopping area of the store and the ones placed in the back room of the store may have the same configuration; however, the present invention is not limited to this example. The electronic-shelf-label unit 510 that is placed in the back room of the store may not need to have the display in the electronic shelf labels 100, depending on the operational situation. In such a case, the electronic-shelf-label controlling device 400 and the electronic shelf labels 100 may be omitted from the unit. When the electronic-shelf-label controlling device 400 and the electronic shelf labels 100 are omitted, only the shelf position IC tag that stores therein the shelf position information, which is the information that uniquely identifies a shelf position, is arranged to be at the predetermined position within the electric wave reception range of the tag reader 350 on the shelf.

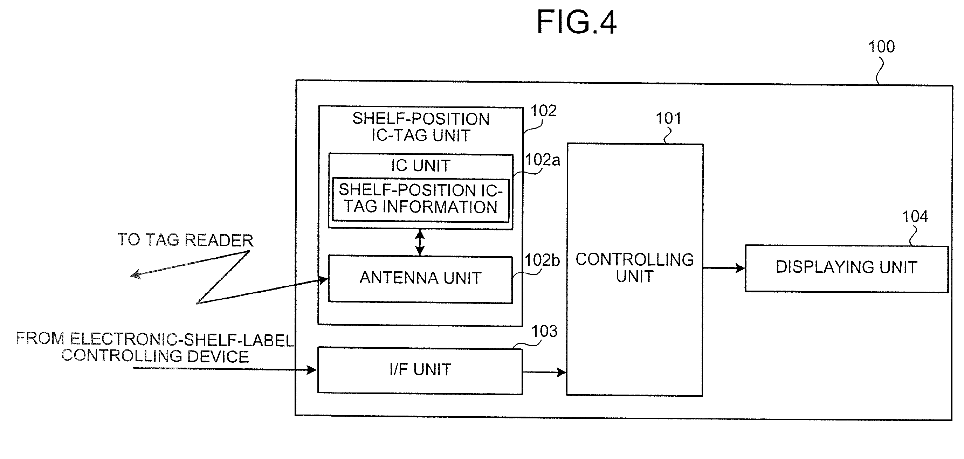

Next, the configuration of the electronic shelf labels 100. Fig. 4 is a functional block diagram of the electronic shelf labels 100. Each of the electronic shelf labels 100 includes a controlling unit 101, a shelf-position IC-tag unit 102, an Interface (I/F) unit 103 that receives information from the electronic-shelf-label controlling device 400 and forwards the received information to the controlling unit 101, and a displaying unit 104 that displays the information forwarded by the I/F unit 103. As noted above, the displaying unit 104 may be made of electronic paper; however, the present invention is not limited to this example. It is acceptable to use any display device as long as it is a thin and light-weight display device such as a liquid crystal display or a segment display device. The controlling unit 101 is a controlling unit that exercises control over the entire electronic shelf label 100. In particular, the controlling unit 101 controls the operation of receiving information from the electronic-shelf-label controlling device 400 and having the received information displayed by the displaying unit 104.

The shelf-position IC-tag unit 102 further includes an IC unit 102a and an antenna unit 102b. The IC unit 102a is a small IC chip that stores therein shelf-position IC-tag information, which is shelf position identification information for uniquely identifying a shelf position. The antenna unit 102b is connected so as to supply electric power from the tag reader 350 to the IC unit 102a and to transmit the shelf-position IC-tag information from the IC unit 102a to the tag reader 350.

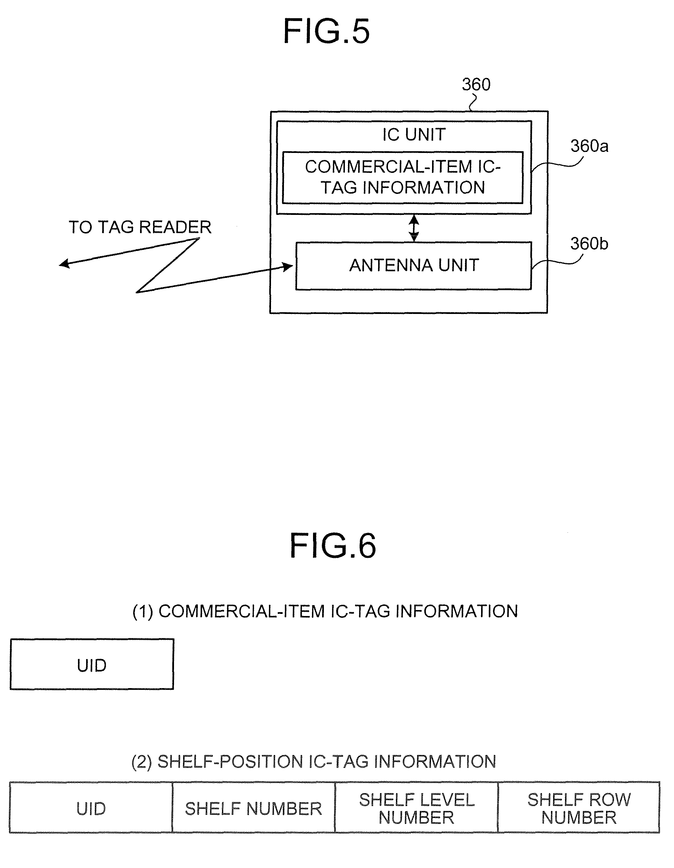

Next, the configuration of each of the commercial-item IC tags 360 shown in Fig. 3 will be explained. Fig. 5 is a functional block diagram for showing the configuration of each of the commercial-item IC tags 360 shown in Fig. 3. As shown in the drawing, the commercial-item IC tag 360 includes an IC unit 360a and an antenna unit 360b. The IC unit 360a is a small IC chip that stores therein commercial-item IC-tag information, which is commercial item identification information for uniquely identifying a commercial item. The antenna unit 360b is connected so as to supply electric power from the tag reader 350 to the IC unit 360a and to transmit the commercial-item IC-tag information from the IC unit 360a to the tag reader 350.

Next, the data format of IC tag information, namely the shelf-position IC-tag information shown in Fig. 4 and the commercial-item IC-tag information shown in Fig. 5, will be explained. Fig. 6 is a drawing for explaining the data format of the IC tag information, namely the shelf-position IC-tag information shown in Fig. 4 and the commercial-item IC-tag information shown in Fig. 5. As shown in (1) in Fig. 6, the commercial-item IC-tag information is information that includes only a UID. As shown in (2) in Fig. 6, the shelf-position IC-tag information is information that includes a UID, a shelf number, a shelf level number, and a shelf row number.

Originally, a UID is identification information for identifying an IC chip itself. Because different IC chips have different UIDs, it is possible to use UIDs as information for identifying different commercial items; however, it is not considered very efficient, in terms of management efficiency, to identify each of the shelf positions using only a UID. In other words, a problem with a processing load would arise if a processing was performed to bring a large number of shelves into correspondence with mutually different shelf numbers, shelf level numbers, and shelf row numbers. To cope with this issue, in addition to a UID, a shelf number, a shelf level number, and a shelf row number are included in the shelf-position IC-tag information. By putting a set of a shelf number, a shelf level number, and a shelf row number into the shelf-position IC-tag information in advance, it is possible to efficiently specify a shelf position.

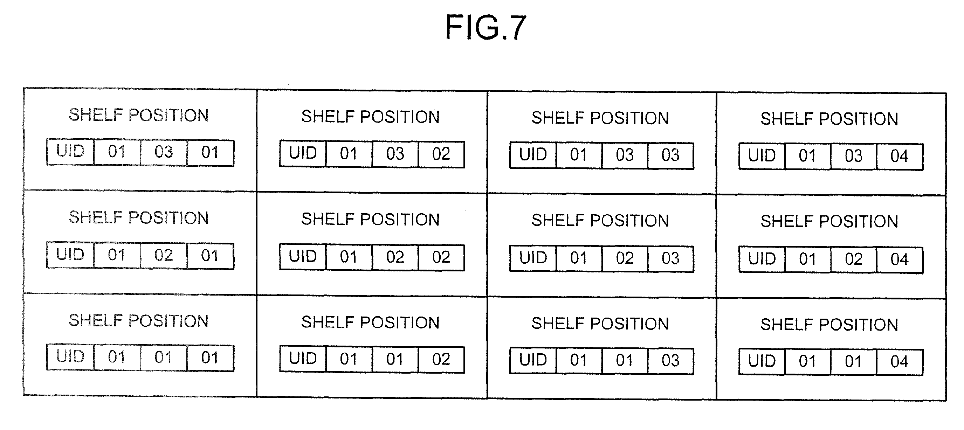

Next, an example of relationship between the shelf-position IC-tag information shown in Fig. 6 and the shelf positions will be explained. Fig. 7 is a drawing for showing an example of relationship between the shelf-position IC-tag information shown in Fig. 6 and the shelf positions. As shown in the drawing, each display shelf or each inventory shelf has twelve commercial item placement positions that are arranged in three vertical levels by four horizontal rows (total: 3 levels x 4 rows = 12 positions). In this example, the shelf number of the display shelf or the inventory shelf is "01". In this situation, as an example of method for assigning shelf level numbers and shelf row numbers, the levels of the shelf are counted from the bottom up, and the rows of the shelf are counted from the left to the right as you face the shelf. According to this method, as shown in the drawing, the commercial item placement position on the lowest level and on the farthest left is expressed with the shelf level position = "03" and the shelf row position = "01". The commercial item placement position on the highest level and on the farthest right is expressed with the shelf level position = "03" and the shelf row position = "04".

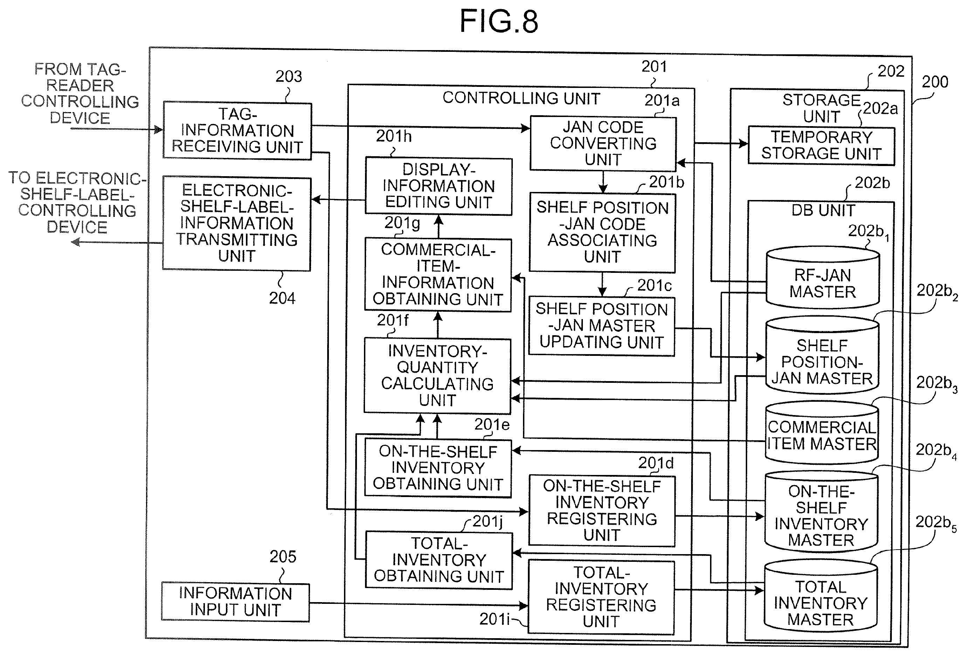

Next, the configuration of the electronic-shelf-label system server shown in Fig. 3 will be explained. Fig. 8 is a functional block diagram for showing the configuration of the electronic-shelf-label system server 200 shown in Fig. 3. As shown in the drawing, the electronic-shelf-label system server 200 includes: a controlling unit 201; a storage unit 202; a tag-information receiving unit 203 that receives IC tag information and forwards the IC tag information to the Japanese Article Number (JAN) code converting unit 201a, the IC tag information having been read by the tag reader 350 from the commercial-item IC tag 360 and the shelf-position IC-tag unit 102 and been forwarded via the tag-reader controlling device 300; an electronic-shelf-label-information transmitting unit 204 that transmits electronic-shelf-label information to the electronic-shelf-label controlling device 400, the electronic-shelf-label information having been received from the display-information editing unit 201h and been configured to be displayed in the electronic shelf label 100; and an information input unit 205 that includes a tag reader for inputting information of commercial items that have newly arrived so as to register commercial items into the inventory when a new shipment of commercial items has arrived.

The controlling unit 201 is a controlling unit that exercises control over the entire electronic-shelf-label system server 200. The controlling unit 201 includes the JAN code converting unit 201a, a shelf position-JAN code associating unit 201b, a shelf position-JAN master updating unit 201c, an on-the-shelf inventory obtaining unit 201e, an inventory-quantity calculating unit 201f, a commercial-item-information obtaining unit 201g, the display-information editing unit 201h, a total-inventory registering unit 201i, and a total-inventory obtaining unit 201j.

The JAN code converting unit 201a performs a processing of converting received commercial-item IC-tag information into a JAN code, by referring to a RF-JAN master 202b₁. The shelf position-JAN code associating unit 201b performs a processing of associating the shelf position information received together with commercial-item IC-tag information with the JAN code converted by the JAN code converting unit 201a. To "associate" means to bring something into correspondence with something else. As a result of this processing, information that indicates "a commercial item with what JAN code is placed at which shelf position" is generated. The shelf position-JAN master updating unit 201c performs a processing of reflecting the information generated by the shelf position-JAN code associating unit 201b into the shelf position-JAN master.

The on-the-shelf inventory registering unit 201d performs a processing of reflecting all of the received pieces of commercial-item IC-tag information into an on-the-shelf inventory master 202b₄. To perform this reflecting processing, the on-the-shelf inventory registering unit 201d deletes all of the old pieces of recorded data in the on-the-shelf inventory master 202b₄ and newly registers all the pieces of commercial-item IC-tag information that have been received.

The on-the-shelf inventory obtaining unit 201e performs a processing of obtaining the entire on-the-shelf inventory that has been registered in the on-the-shelf inventory master 202b₄. The inventory-quantity calculating unit 201f obtains the JAN codes that are in correspondence with the pieces of on-the-shelf inventory information that have been obtained by the on-the-shelf inventory obtaining unit 201e, by referring to the RF-JAN master 202b₁. Subsequently, the inventory-quantity calculating unit 201f counts the pieces of recoded data in which the shelf position and the JAN code match, by referring to the shelf position-JAN master 202b₂ based on the obtained JAN codes. The number obtained as the result of the counting is on-the-shelf inventory information that is calculated for each of the shelf positions and for each of the types of commercial items (i.e. for each of the JAN codes). The on-the-shelf inventory denotes the inventory that actually exists on the display shelves.

The commercial-item-information obtaining unit 201g obtains pieces of commercial item information that are in correspondence with the JAN codes out of the commercial item master 202b3, with respect to the on-the-shelf inventory information or the total inventory information that are calculated by the inventory-quantity calculating unit 201f for each of the shelf positions and for each of the types of commercial items (i.e. for each of the JAN codes). As a result of this obtaining processing, the information that indicates "what commercial item at which shelf position has what commercial item information" is obtained.

The display-information editing unit 201h converts the information that indicates "what commercial item at which shelf position has what commercial item information" and has been obtained by the commercial-item-information obtaining unit 201g into a format that is suitable for the transmission to the electronic shelf label 100 and the display in the electronic shelf label 100. The converted information is transmitted to the electronic-shelf-label controlling device 400 via the electronic-shelf-label-information transmitting unit 204.

The total-inventory registering unit 201i performs a processing of registering the commercial-item IC-tag information input by the information input unit 205 into the total inventory master. When performing the registration processing, the total-inventory registering unit 201i registers the commercial-item IC-tag information by adding a new piece of recorded data to the on-the-shelf inventory master 202b₄.

The total-inventory obtaining unit 201j performs a processing of obtaining the total inventory registered in the total inventory master 202b₅. The inventory-quantity calculating unit 201f obtains the JAN codes that are in correspondence with the total inventory information obtained by the total-inventory obtaining unit 201j, by referring to the RF-JAN master 202b₁. Subsequently, the inventory-quantity calculating unit 201f counts the number of pieces of recorded data in which the shelf position and the JAN code match by referring to the shelf position-JAN master 202b₂ based on the obtained JAN codes. The number obtained as the result of the counting is the total inventory information that is calculated for each of the shelf positions and for each of the types of commercial items (i.e. for each of the JAN codes). The total inventory denotes, in terms of the commercial item management, the inventory that exists on the display shelves or the inventory shelves, and it denotes the total inventory for the entire store.

The storage unit 202 includes a temporary storage unit 202a that is a temporary storage area such as a Random Access Memory (RAM) used when the controlling unit 201 performs a processing and a database (DB) unit 202b that stores therein various kinds of master tables. The DB unit 202b includes the RF-JAN master 202b₁, the shelf position-JAN master 202b₂, the commercial item master 202b₃, the on-the-shelf inventory master 202b₄, and the total inventory master 202b₅.

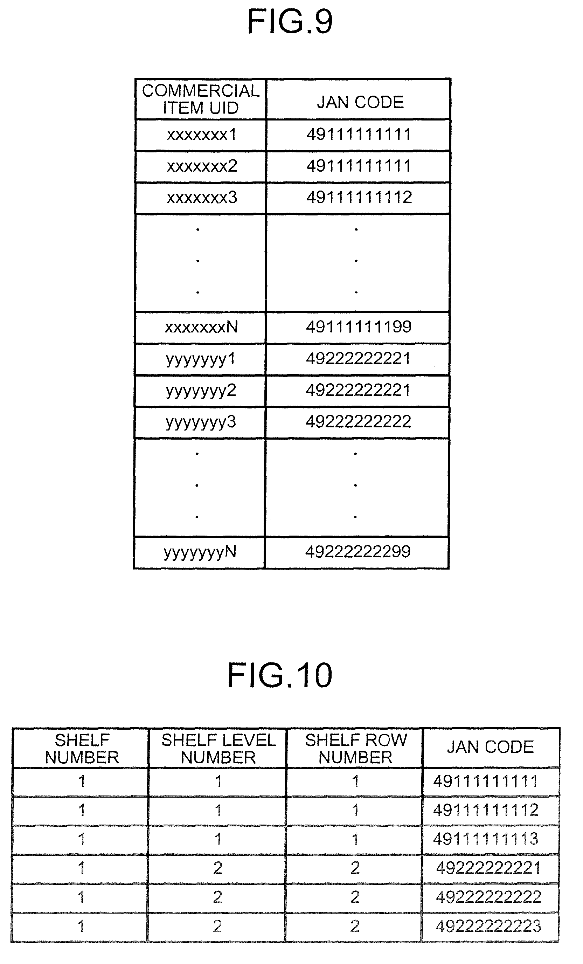

Next, the RF-JAN master 202b₁ shown in Fig. 8 will be explained. Fig. 9 is a drawing for showing a table image of the RF-JAN master 202b₁ shown in Fig. 8. As shown in the drawing, the RF-JAN master 202b₁ has the columns for "commercial item UID" and "JAN code". In the table, JAN codes are brought into correspondence with the commercial item UIDs. The correspondence relationship between the JAN codes and the commercial item UIDs is made when a shipment of commercial items has arrived, by reading each commercial item UID using a tag reader attached to a commercial item, reading a JAN code using a barcode reader, and associating the commercial item UID with the JAN code. For example, according to Fig. 9, the JAN code "49111111111" is in correspondence with the commercial item UID "xxxxxxx1".

Next, the shelf position-JAN master 202b₂ shown in Fig. 8 will be explained. Fig. 10 is a drawing for showing a table image of the shelf position-JAN master 202b₂ shown in Fig. 8. As shown in the drawing, the shelf position-JAN master 202b₂ has the columns for "shelf number", "shelf level number", "shelf row number", and "JAN code". In the table, JAN codes are brought into correspondence with shelf positions each of which is identified by a combination of a "shelf number", a "shelf level number", and a "shelf row number". The correspondence relationship of these pieces of information is made through a batch processing performed once every 24 hours by the shelf position-JAN code associating unit 201b. For example, it is understood from Fig. 10 that a commercial item with the JAN code "49111111111" is placed at a shelf position identified by a combination of the shelf number "1", the shelf level number "1", and the shelf row number "1".

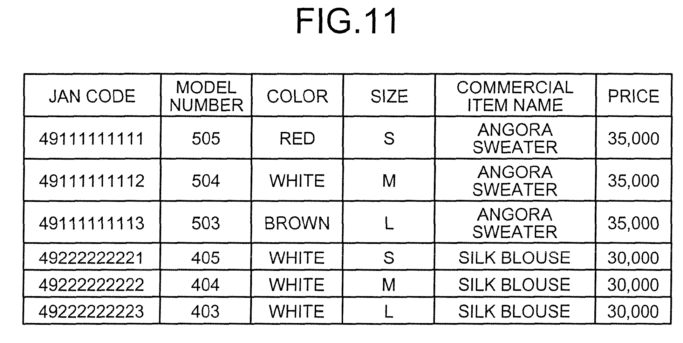

Next, the commercial item master 202b₃ shown in Fig. 8 will be explained. Fig. 11 is a drawing for showing a table image of the commercial item master 202b₃ shown in Fig. 8. As shown in the drawing, the commercial item master 202b₃ has the columns for "JAN code", "model number", "color", "size", "commercial item name", and "price". In the table, commercial item detailed information that indicates commercial item attributes is brought into correspondence with the JAN codes. The correspondence relationship between these pieces of information should be made in advance through an input of information when the commercial items start being handled and sold at the store, so that the commercial item master can be prepared. For example, it is understood from Fig. 11 that the commercial item with the JAN code "49111111111" is a commercial item with the model number "505", in color "red", in size "S", having the commercial item name of "angora sweater", and is priced at "35000".

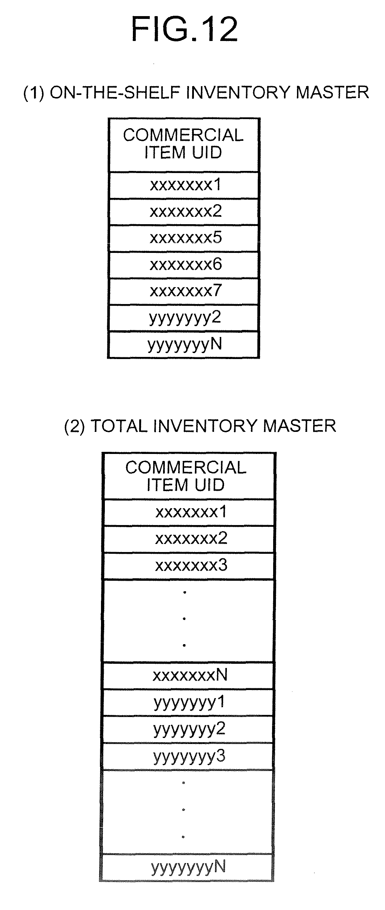

Next, the on-the-shelf inventory master 202b₄ and the total inventory master 202b₅ will be explained. Fig. 12 (1) is a drawing for showing a table image of the on-the-shelf inventory master 202b₄ shown in Fig. 8. As shown in the drawing, the on-the-shelf inventory master 202b₄ has only the column for "commercial item UID". The table is updated in a real-time manner (for example, every two minutes). Accordingly, it is possible to have a real-time understanding of the inventory that exists on the shelves. Fig. 12(2) is a drawing for showing a table image of the total inventory master 202b₅ shown in Fig. 8. As shown in the drawing, the total inventory master 202b₅ has only the column for the "commercial item UID". When a shipment of commercial items arrived, new pieces of recorded data are added to the table, and when each of the commercial items is sold, the piece of recorded data corresponding to the sold commercial item is deleted from the table. With this arrangement, it is possible to have an understanding of the total inventory that exists in the store.

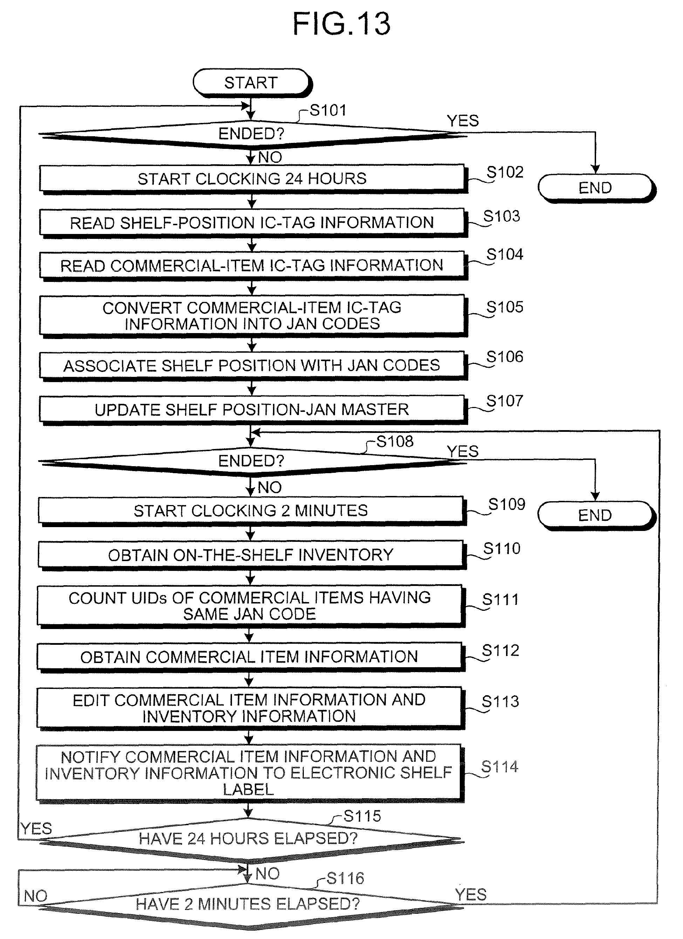

Next, the processing procedure performed by the electronic-shelf-label system server 200 shown in Fig. 8 will be explained. Fig. 13 is a flowchart that shows the processing procedure performed by the electronic-shelf-label system server 200 shown in Fig. 8. At first, it is judged whether the processing should be ended (step S101). When the processing should be ended (step S101: Yes), the processing is ended. When the processing does not have to be ended (step S101: No), the procedure advances to step S102. At step S102, a timer is activated to start the clocking of 24 hours. Subsequently, the shelf-position IC-tag information is read using the tag reader 350 (step S103). The commercial-item IC-tag information is read using the tag reader 350 (step S104).

Next, the read commercial-item IC-tag information is converted into JAN codes by referring to the RF-JAN master 202b₁ (step S105). The read shelf-position IC-tag information is associated with the JAN codes (step S106). The shelf position-JAN master is updated with the pieces of information that are associated with one another (step S107).

Next, it is judged whether the processing should be ended (step S108). When the processing should be ended (step S108: Yes), the processing is ended. When the processing does not have to be ended (step S108: No), the processing advances to step S109.

At step S102, the timer is activated to start the clocking of 2 minutes. Subsequently, the on-the-shelf inventory is obtained (step S110). By referring to the shelf position-JAN master 202b₂, the shelf positions and the JAN codes that correspond to the UIDs of the obtained on-the-shelf inventory are obtained, so that the number of commercial item UIDs having the same JAN codes is calculated (step S111). As a result of this processing, the on-the-shelf inventory quantity is calculated while being associated with the shelf positions and the JAN codes.

Next, by referring to the commercial item master 202b₃, the commercial item information that corresponds to the JAN codes is obtained (step S112). The obtained commercial item information and the obtained inventory information are edited so as to be in a format that is suitable for the transmission to the electronic shelf label 100 and for the display in the electronic shelf label 100 (step S113). The edited commercial item information and the edited inventory information are transmitted to the electronic shelf label 100 (step S114).

Next, it is judged whether the timer clocking 24 hours has already clocked 24 hours (step S115). When it is judged that 24 hours have elapsed (step S115: Yes), the procedure advances to step S101. When it is judged that 24 hours have not elapsed yet (step S115: No), the procedure advance to step S116. At step S116, it is judged whether the timer clocking 2 minutes have already clocked 2 minutes (Step S116). When it is judged that 2 minutes have elapsed (step S116: Yes), the procedure advances to step S108. When it is judged that 2 minutes have not elapsed yet (step S116: No), the procedure at step S116 is repeated.

The loop processing at steps S101 through S115 is the batch processing that is performed once every 24 hours. The loop processing at steps S108 through S116 is a real-time processing that is executed once every 2 minutes. The time setting may be altered to any other period of time; however, with the time setting described above, it is possible to realize a more efficient operation by keeping a good balance between the processing load on the electronic-shelf-label system server 200 and the cycle in which the obtained information is requested.

In the first embodiment, the total inventory is calculated for each size, for each piece of commercial item itemized identification information (i.e. JAN codes), and for each of the shelf positions, based on the information in the total inventory master 202b₅ into which data is registered when a shipment of commercial items has arrived. However, the present invention is not limited to this example. In other words, it is acceptable to obtain the total inventory quantity by calculating the numbers of commercial items having the same piece of commercial item itemized identification information that exist on the commercial item shelves and the inventory shelves for each size and for each piece of commercial item itemized identification information, regardless of the shelf positions.

A second embodiment of the present invention will be explained below. The second embodiment introduces an electronic shelf label, an electronic-shelf-label system server, an electronic-shelf-label system, and an electronic-shelf-label displaying method that have, in addition to the configuration and the processing according to the first embodiment, a configuration and a processing for notifying shelf position incorrectness when a commercial item is placed at a shelf position where it is not supposed to be placed. In other words, the second embodiment is designed to be embodied in addition to the first embodiment.

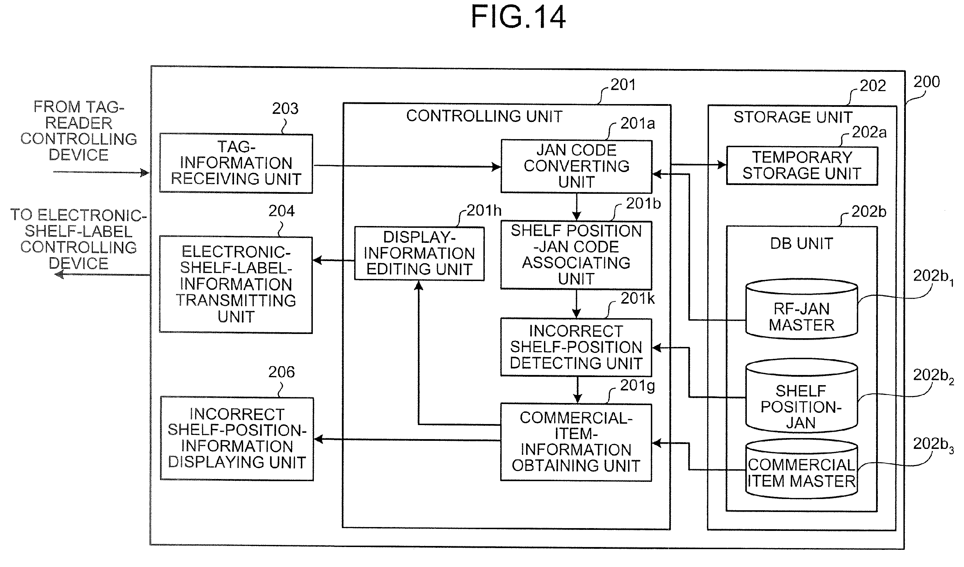

At first, the configuration of the incorrect-shelf-position detection process performed by the electronic-shelf-label system server 200 according to the second embodiment, especially the configuration having characteristics that are not in the first embodiment, will be explained. Fig. 14 is a functional block diagram for showing the configuration of the incorrect-shelf-position detection process performed by the electronic-shelf-label system server 200 according to the second embodiment. As shown in the drawing, the electronic-shelf-label system server 200 includes the controlling unit 201, the storage unit 202, the tag-information receiving unit 203 that receives IC tag information and forwards the IC tag information to the JAN code converting unit 201a, the IC tag information having been read by the tag reader 350 from the commercial-item IC tag 360 and the shelf-position IC-tag unit 102 and been forwarded via the tag-reader controlling device 300; the electronic-shelf-label-information transmitting unit 204 that transmits electronic-shelf-label information to the electronic-shelf-label controlling device 400, the electronic-shelf-label information having been received from the display-information editing unit 201h and been configured to be displayed in the electronic shelf label 100; and an incorrect shelf-position-information displaying unit 206.

The controlling unit 201 is a controlling unit that exercises control over the entire electronic-shelf-label system server 200. The controlling unit 201 includes the JAN code converting unit 201a, the shelf position-JAN code associating unit 201b, an incorrect shelf-position detecting unit 201k, the commercial-item-information obtaining unit 201g, and the display-information editing unit 201h. The functions of the JAN code converting unit 201a and the shelf position-JAN code associating unit 201b are the same as the ones according to the first embodiment.

The incorrect shelf-position detecting unit 201k performs the processing of comparing the information that indicates "a commercial item with what JAN code is placed at which shelf position" that has been generated by the shelf position-JAN code associating unit 201b with the information registered in the shelf position-JAN master 202b₂. The information that is registered in the shelf position-JAN master 202b₂ and indicates "a commercial item with what JAN code is placed at which shelf position" is obtained once every 24 hours (for example, when the commercial items are put in order before the store opens or after the store closes). This information is considered to indicate the shelf positions at which the commercial items are supposed to be placed correctly. Accordingly, by regularly checking against the information registered in the shelf position-JAN master 202b₂ in a brief cycle, it is possible to detect incorrect shelf positions in a real-time manner.

The commercial-item-information obtaining unit 201g obtains, out of the commercial item master 202b3, the commercial item information that corresponds to a JAN code of the commercial item that is placed at an incorrect shelf position that has been detected by the incorrect shelf-position detecting unit 201k. As a result of this processing, the information that indicates "what commercial item information the commercial item placed at an incorrect shelf position has" is obtained.

The display-information editing unit 201h converts the information that indicates "what commercial item at which shelf position has what commercial item information" and has been obtained by the commercial-item-information obtaining unit 201g into a format that is suitable for the transmission to the electronic shelf label 100 and the display in the electronic shelf label 100. The converted information is transmitted to the electronic-shelf-label controlling device 400 via the electronic-shelf-label-information transmitting unit 204.

The storage unit 202 includes the temporary storage unit 202a that is a temporary storage area such as a RAM used when the controlling unit 201 performs a processing and the DB unit 202b that stores therein various kinds of master tables. The DB unit 202b includes the RF-JAN master 202b₁, the shelf position-JAN master 202b₂, and the commercial item master 202b₃. The RF-JAN master 202b₁, the shelf position-JAN master 202b₂, and the commercial item master 202b₃ are the same as the ones according to the first embodiment.

The incorrect shelf-position-information displaying unit 206 may be a Cathode Ray Tube (CRT) display device or a liquid crystal display device. The information that indicates "what commercial item information the commercial item placed at an incorrect shelf position has" and has been obtained by the commercial-item-information obtaining unit 201g is displayed on the incorrect shelf-position-information displaying unit 206.

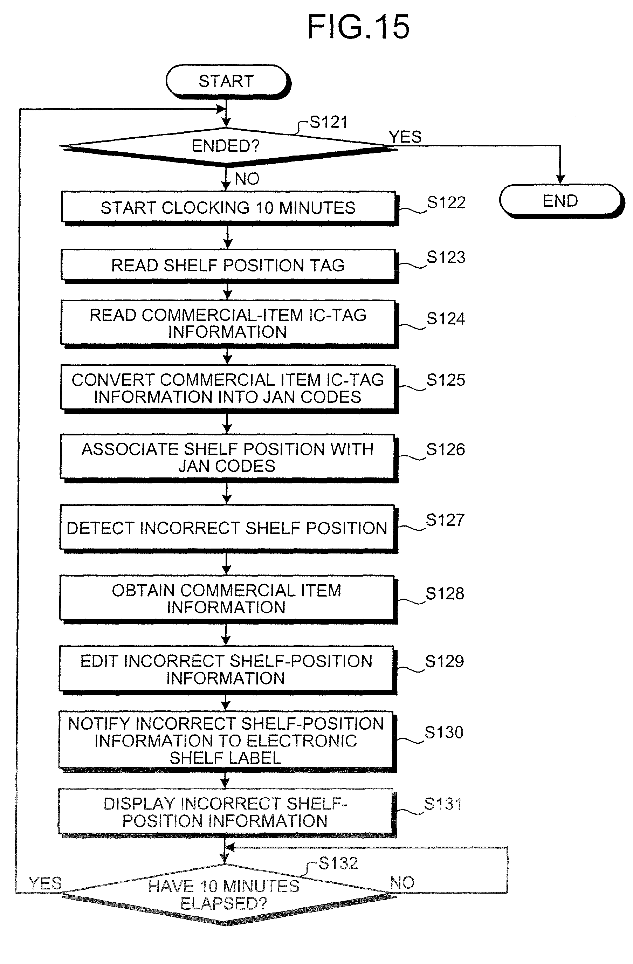

Next, the processing procedure in the incorrect-shelf-position detection process performed by the electronic-shelf-label system server 200 shown in Fig. 14 will be explained. Fig. 15 is a flowchart for showing the processing procedure in the incorrect-shelf-position detection process performed by the electronic-shelf-label system server 200 shown in Fig. 14. At first, it is judged whether the processing should be ended (step S121). When the processing should be ended (step S121: Yes), the processing is ended. When the processing does not have to be ended (step S121: No), the procedure advances to step S122.

At step S122, a timer is activated to start the clocking of 10 minutes. Subsequently, the shelf-position IC-tag information is read using the tag reader 350 (step S123). The commercial-item IC-tag information is read using the tag reader 350 (step S124).

Next, the read commercial-item IC-tag information is converted into JAN codes by referring to the RF-JAN master 202b₁ (step S125). Subsequently, the read shelf-position IC-tag information is associated with the JAN codes (step S126). Subsequently, the processing of comparing the information that indicates "a commercial item with what JAN code is placed at which shelf position" and has been obtained at step S126 with the information registered in the shelf position-JAN master 202b₂ (step S127). According to the result of the comparing processing, shelf position incorrectness is detected.

Next, the commercial item information that corresponds to the JAN code with the incorrect shelf position is obtained, by referring to the commercial item master 202b₃ (step S128). The incorrect shelf position information based on the obtained commercial item information is edited so as to be in a format that is suitable for the transmission to the electronic shelf label 100 and for the display in the electronic shelf label 100 (step S129). The edited incorrect shelf position information is transmitted to the electronic shelf label 100 (step S130). Subsequently, a list of incorrect shelf position information is displayed on the incorrect shelf-position-information displaying unit 206 (step S131).

Next, it is judged whether the timer clocking 10 minutes has already clocked 10 minutes (step S132). When it is judged that 10 minutes have elapsed (step S132: Yes), the procedure advances to step S121. When it is judged that 10 minutes have not elapsed yet (step S132: No), the procedure at step S132 is repeated. By repeating the processing at steps S121 through S132, it is possible to detect incorrect shelf positions of commercial items every 10 minutes, in a real-time manner.

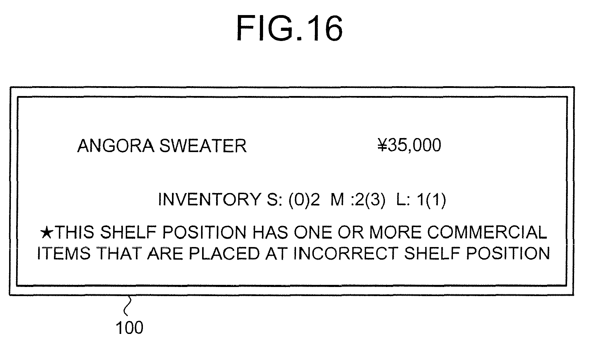

Next, the contents of the incorrect shelf position display in the electronic shelf label 100, as a result of the processing of transmitting the incorrect shelf position information to the electronic shelf label 100 (step S130) as shown in Fig. 15 will be explained. Fig. 16 is a drawing for showing an example of the contents of an incorrect shelf position display in the electronic shelf label 100, as a result of the processing at step S130 shown in Fig. 15. As shown in the drawing, when it has been detected that a shelf position has one or more commercial items that are incorrectly placed at the shelf position where they are not supposed to be placed, a sentence that reads "This shelf position has one or more commercial items that are placed at an incorrect shelf position" is displayed in addition to the normal display of the commercial item name, the commercial item price, and the inventory quantities for each size. With this arrangement, it is possible to easily recognize that the shelf position has one or more commercial items that are not supposed to be placed there. Thus, it is possible to improve efficiency of the work by the store staff to put the commercial items in order.

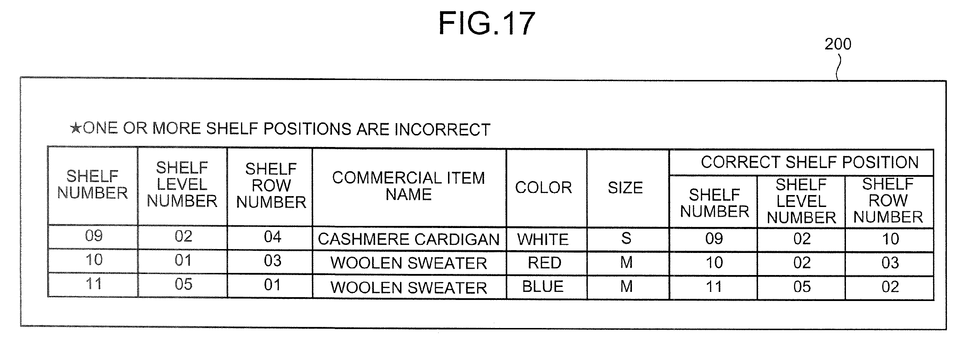

Next, the contents of the display of a list of incorrect shelf position information displayed by the incorrect shelf-position-information displaying unit 206 included in the electronic-shelf-label system server 200, as a result of the incorrect shelf position information displaying processing (step S131) shown in Fig. 15 will be explained. Fig. 17 is a drawing for explaining an example of the contents of the display of a list of incorrect shelf position information displayed by the incorrect shelf-position-information displaying unit 206 included in the electronic-shelf-label system server 200, as a result of the processing at step S131 shown in Fig. 15. As shown in the drawing, when it has been detected that a shelf position has one or more commercial items that are incorrectly placed at the shelf position where they are not supposed to be placed, a list showing the "shelf number" the "shelf level number", the "shelf row number", the "commercial item name", the "color", the "size", and the "correct shelf position (the shelf number, the shelf level number, and the shelf row number)" related to the discovered incorrect shelf position is displayed. With this arrangement, it is possible to easily recognize that the shelf position has one or more commercial items that are not supposed to be placed there from the display of the list. Thus, it is possible to improve efficiency of the work by the store staff to put the commercial items in order.

The present invention is not limited to the two embodiments explained above. The present invention may be embodied in any other various embodiment examples within the scope of technical ideas defined in the claims. Also, the effects of the invention are not limited to the ones discussed in the description of the first and the second embodiments.

According to an aspect of the present invention, the electronic shelf label makes it possible to recognize, at a glance, the inventory quantity and the commercial item detailed information of the commercial items that are placed at the shelf positions to each of which the electronic shelf label is attached. Thus, an effect is achieved where it is possible to improve the level of convenience in customers' shopping and also to improve efficiency in the work by the store staff to put the commercial items in order and to replenish commercial items. Further, because each of the electronic tags storing therein the commercial item position information is attached to a different one of the commercial item placement positions, an effect is achieved where it is possible to respond to changes in the layout of the shelves in a flexible manner without having to change the configuration of the system.

Moreover, in the electronic shelf label, it is possible to recognize, at a glance, the inventory quantity and the commercial item detailed information, for each size, of the commercial items that are placed at the shelf positions to each of which the electronic shelf label is attached. Thus, an effect is achieved where the customers who shop in the store and the store staff are released from the trouble of having to check the size of each of the commercial items by taking them in hand one by one.

Furthermore, the electronic shelf label includes an electronic tag that indicates a shelf position and is built in the electronic shelf label. Thus, when the electronic shelf label is replaced with another one or when the electronic shelf label is moved, the electronic tag also moves. Accordingly, an effect is achieved where the definiteness of the association between the electronic shelf label and the information that identifies the shelf position and is included in the electronic tag is maintained because the physical proximity between the electronic shelf label and the information is maintained. Furthermore, because each of the electronic tags storing therein commercial item position information is built into a different one of the electronic shelf labels, an effect is achieved where it is possible to respond to changes in the layout of the shelves in a flexible manner by only moving the electronic shelf labels, without having to change the configuration of the system.

Moreover, it is possible to display, in each of the electronic shelf labels, the inventory quantity and the commercial item detailed information of the commercial item that is placed at the shelf position to which the electronic shelf label is attached, in such a manner that the quantity and the detailed information can be understood at a glance. Thus, an effect is achieved where it is possible to improve the level of convenience in customers' shopping and also to improve efficiency in the work by the store staff to put the commercial items in order and to replenish commercial items.

Furthermore, it is possible to display, in each of the electronic shelf labels, the inventory quantity and the commercial item detailed information, for each size, of the commercial item that is placed at the shelf position to which the electronic shelf label is attached, in such a manner that the quantity and the detailed information can be understood at a glance. Thus, an effect is achieved where the customers who shop in the store and the store staff are released from the trouble of having to check the size of each of the commercial items by taking them in hand one by one.

Furthermore, provided is the commercial item shelf position inconformity notifying unit that notifies, when the commercial item shelf position conformity judging unit has judged that the pieces of commercial item position information and the pieces of commercial item itemized identification information that are stored in the commercial item shelf position information storing unit do not conform to the pieces of commercial item position information and the pieces of commercial item itemized identification information that are obtained in a real-time manner, notifies the inconformity to the electronic shelf label so that the electronic shelf label displays the inconformity. Thus, it is possible to notify promptly that one or more commercial items are placed at a shelf position that is different from the shelf positions at which they are supposed to be placed. Thus, an effect is achieved where it is possible to improve efficiency in the work by the store staff to put the commercial items in order.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An electronic shelf label (100) that displays, at each of commercial item placement positions, information obtained by a server device (200) based on pieces of commercial item identification information, the server device bringing the pieces of commercial item identification information read from electronic tags (360) each of which is attached to a different one of commercial items placed on shelves in correspondence with pieces of commercial item position information read from electronic tags each of which is attached to a different one of the commercial item placement positions on the shelves, wherein
at each of the commercial item placement positions on the shelves, the electronic shelf label displays, for each of the commercial items, a commercial item inventory quantity calculated by the server device and commercial item detailed information that corresponds to the pieces of commercial item identification information.

2. The electronic shelf label according to claim 1, wherein
the electronic shelf label displays the commercial item inventory quantity that is calculated for each size, based on size information that is for the commercial items and is included in the commercial item detailed information.

3. The electronic shelf label according to claim 1, comprising the electronic tags each of which is attached to a different one of the commercial item placement positions on the shelves.

4. A server device (200) used in an electronic shelf label system (500) that brings pieces of commercial item identification information read from electronic tags each of which is attached to a different one of commercial items placed on shelves (100) in correspondence with pieces of commercial item position information read from electronic tags each of which is attached to a different one of commercial item placement positions on the shelves and displays, at each of the commercial item placement positions, information based on the pieces of commercial item identification information, the server device comprising:
a calculating unit (201f) that calculates a commercial item inventory quantity for each of the pieces of commercial item position information and for each of pieces of commercial item itemized identification information that correspond to the pieces of commercial item identification information; and
an obtaining unit (201j) that obtains commercial item detailed information that corresponds to each of the commercial items of which the commercial item inventory quantity is calculated by the calculating unit.

5. The server device according to claim 4, wherein the calculating unit (201f) calculates, for each size, the commercial item inventory quantity based on size information that is for the commercial items and is included in the pieces of commercial item identification information.

6. The server device according to claim 4, further comprising a converting unit (201a) that converts the pieces of commercial item identification information into the pieces of commercial item itemized identification information, wherein
the calculating unit (201f) calculates the commercial item inventory quantity based on the pieces of commercial item itemized identification information converted by the converting unit.

7. The server device according to claim 4, further comprising a storing unit (202) that stores therein the pieces of commercial item identification information of the commercial items placed on the shelves, wherein
the calculating unit (201f) calculates the commercial item inventory quantity for each of the pieces of commercial item itemized identification information that are associated with the pieces of commercial item identification information stored in the storing unit.

8. The server device according to claim 4, further comprising a storing unit that associates the pieces of commercial item position information with the pieces of commercial item itemized identification information and stores therein the associated pieces of information;
a judging unit that obtains pieces of commercial item position information and pieces of commercial item itemized identification information in a real-time manner and judges whether the real-time pieces of commercial item position information and the real-time pieces of commercial item itemized identification information conform to the pieces of commercial item position information and the pieces of commercial item itemized identification information that are stored in the storing unit; and
a notifying unit that, when the judging unit judges that the pieces of commercial item position information and the pieces of commercial item itemized identification information that are stored in the storing unit do not conform to the real-time pieces of commercial item position information and the real-time pieces of commercial item itemized identification information, notifies the inconformity to the electronic shelf label so that the electronic shelf label displays the inconformity.

9. An electronic-shelf-label system (500) that associates pieces of commercial item identification information read from electronic tags (360) each of which is attached to a different one of commercial items that are placed on shelves with pieces of commercial item position information read from electronic tags each of which is attached to a different one of commercial item placement positions on the shelves and displays, at each of the commercial item placement positions, information based on the pieces of commercial item identification information, the electronic-shelf-label system comprising:
a server device (200) that includes
a calculating unit (201f) that calculates a commercial item inventory quantity for each of the pieces of commercial item position information and for each of pieces of commercial item itemized identification information that correspond to the pieces of commercial item identification information; and
an obtaining unit (201j) that obtains commercial item detailed information that corresponds to each of the commercial items of which the commercial item inventory quantity calculated by the calculating unit; and
an electronic shelf label (100) that includes a displaying unit (104) that associates the commercial item inventory quantity calculated by the calculating unit with the commercial item detailed information obtained by the obtaining unit and displays, at each of the commercial item placement positions corresponding to the commercial items, the associated quantity and detailed information for each of the commercial items.

10. The electronic-shelf-label system according to claim 9, wherein
the calculating unit (201f) calculates, for each size, the commercial item inventory quantity based on size information that is for the commercial items and is included in the pieces of commercial item identification information, and
the displaying unit (104) displays, for each size, the commercial item inventory quantity calculated by the calculating unit.

11. The electronic-shelf-label system according to claim 9, wherein the server device further includes a converting unit (201a) that converts the pieces of commercial item identification information into the pieces of commercial item itemized identification information, and
the calculating unit calculates the commercial item inventory quantity based on the pieces of commercial item itemized identification information converted by the converting unit.

12. The electronic-shelf-label system according to claim 9, wherein the server device further includes a storing unit that stores therein the pieces of commercial item identification information of the commercial items placed on the shelves, and
the calculating unit calculates the commercial item inventory quantity for each of the pieces of commercial item itemized identification information that are associated with the pieces of commercial item identification information stored in the storing unit.

13. The electronic-shelf-label system according to claim 9, wherein the shelves includes a display shelf that is placed in a shopping area of a store and a storage shelf that stores therein inventory commercial items and is placed in a back room of the store.

14. The electronic-shelf-label system according to claim 9, further comprising:
a storing unit that stores therein pieces of commercial item identification information of all commercial items that exist in a store as inventory; and
a total calculating unit that calculates a commercial item total inventory quantity for each of pieces of commercial item itemized identification information that correspond to the pieces of commercial item identification information stored in the storing unit, wherein
the commercial item inventory-quantity calculating unit the commercial item inventory quantity for each of a commercial item display shelf and the commercial item inventory shelf, and
for a set of commercial items having identical piece of commercial item itemized identification information, the displaying unit displays
the commercial item inventory quantity calculated by the calculating unit for each of the commercial item display shelf and the commercial item inventory shelf; and
the commercial item total inventory quantity calculated by the total calculating unit.

15. The electronic-shelf-label system according to claim 9, wherein
the calculating unit calculates the commercial item inventory quantity for each of the commercial item display shelf and a commercial item inventory shelf, and
for a set of commercial items having identical piece of commercial item itemized identification information, the displaying unit displays
the commercial item inventory quantity calculated by the calculating unit for each of the commercial item display shelf and the commercial item inventory shelf; and
a total of the commercial item inventory quantity for both the commercial item display shelf and the commercial item inventory shelf.

16. The electronic-shelf-label system according to claim 9, wherein the server device further includes:
a storing unit that associates the pieces of commercial item position information with the pieces of commercial item itemized identification information and stores therein the associated pieces of information;
a judging unit that obtains pieces of commercial item position information and pieces of commercial item itemized identification information in a real-time manner and judges whether the real-time pieces of commercial item position information and the real-time pieces of commercial item itemized identification information conform to the pieces of commercial item position information and the pieces of commercial item itemized identification information that are stored in the storing unit; and
a notifying unit that, when the judging unit judges that the pieces of commercial item position information and the pieces of commercial item itemized identification information that are stored in the storing unit do not conform to the real-time pieces of commercial item position information and the real-time pieces of commercial item itemized identification information, notifies the inconformity to the electronic shelf label so that the electronic shelf label displays the inconformity.

17. The electronic-shelf-label system according to claim 16, wherein the server device further includes a list displaying unit that displays, when the judging unit judges that the pieces of commercial item position information and the pieces of commercial item itemized identification information that are stored in the storing unit do not conform to pieces of commercial item position information and pieces of commercial item itemized identification information that are obtained in a real-time manner, the inconformity in a list.
